Europäisches Patentamt

European Patent Office

Office européen des brevets

(11) Publication number: **0 178 328**
A1

(12) # EUROPEAN PATENT APPLICATION

published in accordance with Art. 158(3) EPC

(21) Application number: 85901566.1

(22) Date of filing: 20.03.85

Data of the international application taken as a basis:

(86) International application number:
PCT/JP85/00137

(87) International publication number:
WO85/04496 (10.10.85 85/22)

(51) Int. Cl.⁴: **G 05 B 15/02**
G 05 B 19/02

(30) Priority: 22.03.84 JP 55115/84

(43) Date of publication of application:
23.04.86 Bulletin 86/17

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KURAKAKE, Mitsuo Izumi-Haitsu 103
3-10, Tamadaira 3-chome Hino-shi
Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) ANALOG INPUT CONTROL SYSTEM.

(57) An analog input control system of a programmable
controller controls a machine tool (3) responsive to instruc-
tions from a PC unit (2) and analog detect signals from the
machine tool (3), and is equipped with an interface (10)
which has means for setting a desired value and means for
comparing the analog detect signals with the desired value.
A desired value is set for a means that sets the desired value
while the programmable controller executes a predeter-
mined job to control the machine tool (3). The programmable
controller then executes another job. When the comparator
means detects the analog signal that has reached a predeter-
mined value and the interface (10) produces an output signal,
then said output signal serves as an interrupt signal, and the
programmable controller is shifted to said predetermined
job to control the machine tool (3).

./...

# Fig. 3

DESCRIPTION

ANALOG INPUT CONTROL SYSTEM

Technical Field

This invention relates to an analog input control system and, more particularly, to an input control system for detection signals (analog values) fed into a programmable controller from various detectors on a machine side in a control system wherein the operation of the machine, such as a hydraulic valve, is controlled by the programmable controller.

Background Art

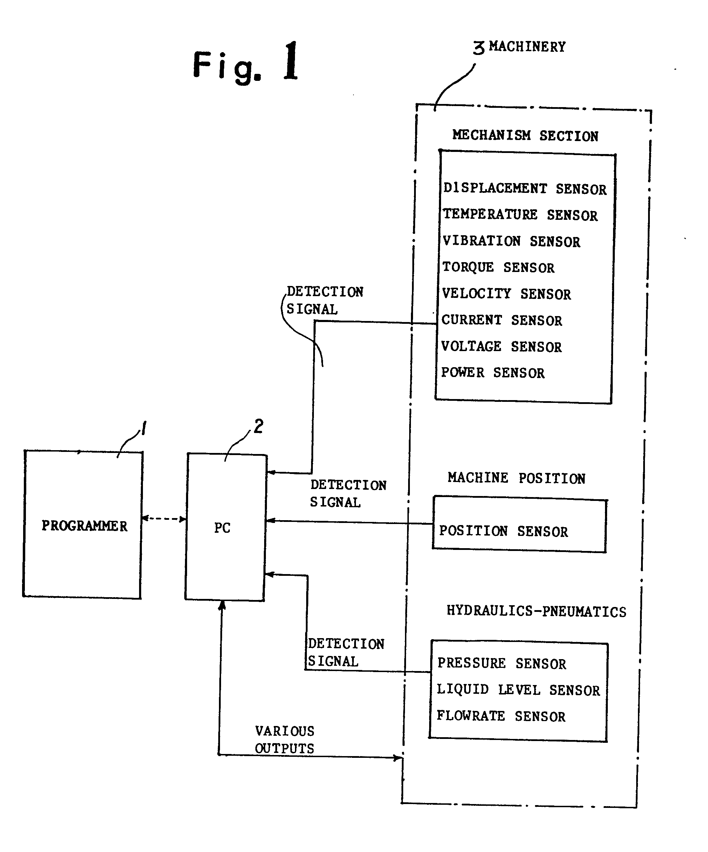

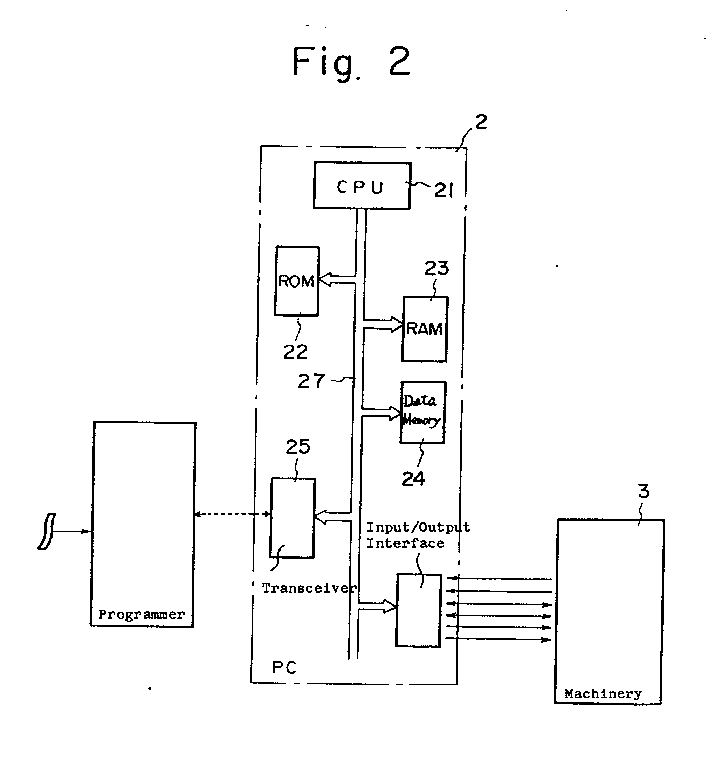

Fig. 1 is a block diagram illustrating a system for controlling machinery. In the Figure, numeral 2 denotes a programmable controller (hereafter referred to as as PC unit) for the sequence control of mechanical elements on the side of the machinery 3. The PC unit 2 is connected to a programmer 1 at, e.g., programming time. As shown in Fig. 2, the the PC unit 2 is constituted by a processor (CPU) 21 for performing predetermined processing based on a control program and sequence program, a read-only memory (ROM) 22 storing the control program, a random-access memory (RAM) 23 storing the sequence program, a data memory 24, a transceiver 25 for performing an exchange of signals with the programmer 1, an input/output interface 26 for sending signals to and receiving signals from the machinery 3, and an address/data bus 27 interconnecting the foregoing units.

The sections constituting the machinery 3 use various sensors in various ways. For example, an operating mechanism section of the machinery 3 is provided with various machines and sensors such as various hydraulic valves for controlling hydraulic equipment and the like, a hydraulic motor, displacement sensor, temperature sensor, vibration sensor, torque sensor, velocity sensor, current sensor, voltage sensor and power sensor. These machines and sensors produce operation and detection signals that are fed to the PC unit 2. In order to sense the status of hydraulic pressure, pneumatic pressure and the like in a tank, accumulator or the like, the machinery 3 is additionally provided with a pressure sensor, a liquid level sensor, a flowrate sensor, etc. Detection signals produced by these sensors are also fed to the PC unit 2. On the basis of these various signals, the PC unit 2 sends various output signals to the machinery 3 to control its mechanical elements.

In order to greatly enhance operation efficiency, recent PC units perform adaptive control or real-time monitoring of the various sections of the machinery. Consequently, cases in which various analog signals are dealt with have increased greatly.

In order to perform fine control with a control system of the above-described type by carrying out, e.g., precise high-pressure detection under conditions in which there are sudden changes in hydraulic pressure, it is necessary to raise the scanning time of the PC unit 2 or, in other words, to perform scanning in a shorter time. However, since the PC unit 2 executes a variety of functions, the fact is that raising scanning time is difficult. At most, scanning time ranges from 10 to 20 ms. For the foregoing reasons, difficulties are encountered in the conventional control system when controlling control valves in the face of sudden changes in hydraulic pressure.

Disclosure of the Invention

The present invention has been devised in order to solve the problems in the conventional control system described above, and its object is provide an analog input control system in a programmable controller whereby a machine side can be exactly controlled on the basis of an analog detection signal from the machine side even if the signal undergoes sudden variations.

According to the present invention, there is provided an analog input control system of a programmable controller for performing sequence control of a machine side based on a predetermined sequence program, and for controlling the machine side on the basis of an analog detection signal input from the machine side. The programmable controller has an interface which receives the detection signal from the machine side for issuing an output signal when the value of the signal attains a predetermined value. The output signal from the interface is used as a processor interrupt signal.

Thus, the present invention provides an interface for issuing an output signal when an analog input signal from the machine side attains a predetermined value, the output signal from the interface being used as a processor interrupt signal. Accordingly, when the processor accepts the interrupt signal, sequence control is temporarily suspended and processing is executed based on the interrupt signal. This enables exact control of the machine side to cope with changes in the analog input signal from the machine side, even when the signal changes in a sudden manner.

Brief Description of the Drawings

Figs. 1 and 2 are block diagrams illustrating a control system, Fig. 3 is a block diagram of a control system embodying the present invention, Fig. 4 is a view for describing a rack in which a variety of modules are loaded, and Fig. 5 is a time chart illustrating an interrupt state.

Best Mode for Carrying Out the Invention

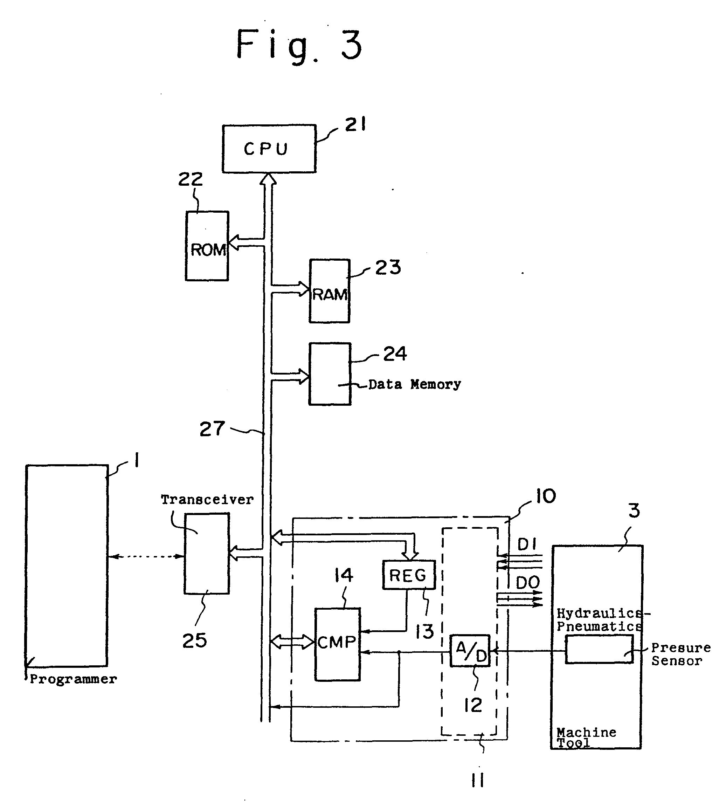

The present invention will now be described on the basis of an embodiment illustrated in Figs. 3 through 5.

Fig. 3 is a block diagram illustrating an embodiment of a PC unit embodying the present invention. The PC unit 2 is constituted by the processor 21, the ROM 22, the RAM 23, the data memory 24, the transceiver 25 for performing an exchange of signals with the programmer 1, an input/output interface 10 for sending signals to and receiving signals from the machinery 3, and the address/data bus 27 interconnecting the foregoing units, just as illustrated in Fig. 2. The input/output interface 10 is constituted by a rack 11 for accommodating various modules, such as an A/D module, DO module and DI module, the A/D module accommodated in the rack, a register 13 and a comparator 14.

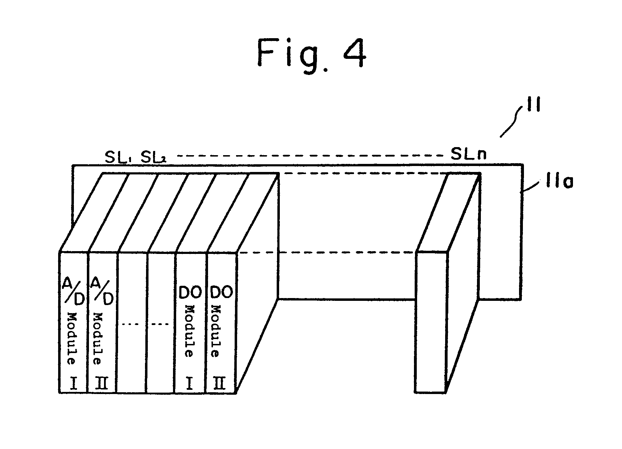

Fig. 4 is a view for describing the rack 11 accommodating the various modules. The rack 11 has a mother board 11a equipped with slots SL1 - SLn into which various cards in module form can be plugged. The modules include an A/D module, an AC 110 V input module, an AC 100 V output module, and the like. By plugging the cards into the mother board 11a in accordance with the control system, the PC unit 2 is made capable of performing the sequence control of a magnetics circuit conforming to the control system.

The operation of the analog input control system of the present invention will now be described. As evident from Fig. 3, the machinery 3 is provided with a pressure sensor for sensing hydraulic pressure in order to control the hydraulic valves. An analog output signal from the pressure sensor is applied to the A/D module 12 of the input/output interface 10 for being converted into a digital signal. The output signal of the A/D converter 12 is applied to one terminal of the comparator 14 and also to the data bus 27 without passing through the comparator 14.

The register 13 registers in advance the value that is to be sensed and can be set appropriately by the CPU 21.

When an output value from the A/D module 12 and the value set in the register agree, the comparator 14 issues an output signal. The output signal is accepted as an interrupt signal by the CPU 21 via the data bus 27. Thus, when the output signal of the comparator 14 is received, the CPU 21 temporarily suspends the sequence control of the PC unit 2 and gives priority to execution of hydraulic valve control in response to the output signal from the comparator 11.

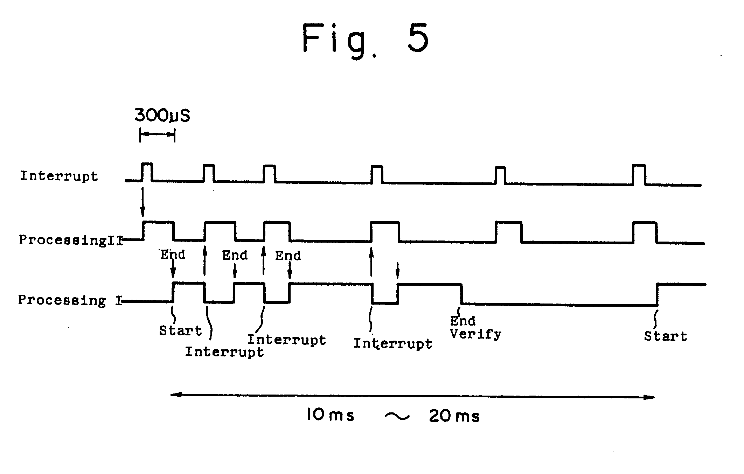

Fig. 5 is a time chart illustrating this sitation. When the output signal from the comparator 14 is accepted as an interrupt signal by the CPU 21, the latter temporarily interrupts sequence processing I and performs sequence processing II, namely control of, e.g., the hydraulic valve. When processing II ends, the CPU 21 executes processing I, namely ordinary sequence control. Though the foregoing description relates to control of an analog signal from a pressure sensor for controlling a hydraulic valve, the present invention is not limited thereto. It goes without saying that the invention is applicable as a control system for analog inputs from sensors that require stringent control, such as temperature sensors, liquid level sensors and flowrate sensors, thus coping with the increasing demand to deal with analog signals, as mentioned above. Further, though the register 13, comparator 14, etc., of the input/output interface 10 are shown to be composed of hardware circuits in Fig. 3, the same functions can be implemented by using a microprocessor, in which case functions can be enhanced as by varying the number of compared bits and increasing the number of registers.

Industrial Applicability

As set forth above, the present invention is arranged so that a signal produced as an output when the value an analog input signal attains a predetermined value is used as an interrupt signal of a processor. This makes it possible to perform exact control to cope with a change in the analog input signal. Accordingly, the invention is well-suited for use in control systems in machine tools wherein hydraulic systems and the like undergo sudden changes.

0178328

CLAIMS:

1. An analog input control system of a programmable controller for performing sequence control of a machine side based on a predetermined sequence program, and for controlling the machine side on the basis of an analog detection signal input from the machine side, comprising:

means for setting a target value;

means for comparing said analog detection signal and said target value;

means for issuing an output signal as an interrupt signal when said comparing means senses that said analog detection signal has attained a predetermined value; and

means responsive to said interrupt signal for causing the programmable controller to execute a predetermined job for controlling the machine side.

2. An analog input control system of a programmable controller according to claim 1, characterized in that the programmable controller is constituted by a microcomputer having a processor, a memory and an input/output circuit.

3. An analog input control system of a programmable controller according to claim 1 or 2, characterized in that the programmable controller is equipped with an input/output interface having analog/digital conversion means for converting signals from the machine side, means for setting a target value, and means for

0178328

comparing the analog detection signal and the target value.

0178328

# Fig. 1

3 MACHINERY

MECHANISM SECTION

DISPLACEMENT SENSOR
TEMPERATURE SENSOR
VIBRATION SENSOR
TORQUE SENSOR
VELOCITY SENSOR
CURRENT SENSOR
VOLTAGE SENSOR
POWER SENSOR

DETECTION
SIGNAL

_1_

_2_

PROGRAMMER

PC

DETECTION
SIGNAL

MACHINE POSITION

POSITION SENSOR

DETECTION
SIGNAL

HYDRAULICS-PNEUMATICS

PRESSURE SENSOR
LIQUID LEVEL SENSOR
FLOWRATE SENSOR

VARIOUS
OUTPUTS

# Fig. 2

CPU — 21

ROM

22

23

RAM

27

Data Memory

24

25

Transceiver

Programmer

PC

Input/Output Interface

3

Machinery

2

# Fig. 3

# Fig. 4

SL₁ SL₂ —————————————————————————— SLₙ

A/D Module I  A/D Module II  ....  ....  DO Module I  DO Module II

# Fig. 5

300μS

Interrupt

Processing II

End    End    End

Processing I

Start    Interrupt    Interrupt    End
          Interrupt              Verify    Start

10 ms ～ 20 ms

5/5

0178328

# INTERNATIONAL SEARCH REPORT

International Application No. PCT/JP85/00137

## I. CLASSIFICATION OF SUBJECT MATTER (if several classification symbols apply, indicate all) ²

According to International Patent Classification (IPC) or to both National Classification and IPC

Int. Cl⁴ G05B 15/02, 19/02

## II. FIELDS SEARCHED

### Minimum Documentation Searched ⁴

| Classification System | Classification Symbols |
|---|---|
| IPC | G05B 15/00-15/02, 19/00-19/16, 21/00-21/02 |

### Documentation Searched other than Minimum Documentation to the Extent that such Documents are Included in the Fields Searched ⁵

| | |
|---|---|
| Jitsuyo Shinan Koho | 1926 - 1985 |
| Kokai Jitsuyo Shinan Koho | 1971 - 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| Y | JP, A, 56-79303 (Hitachi, Ltd.) 29 June 1981 (29. 06. 81) Page 19, left column, lines 6 to 20, (Family nashi) | 1 - 3 |
| Y | JP, A, 55-59580 (Toshiba Corp.) 6 May 1980 (06. 05. 80) Page 619, right column, line 9 to page 620, left column, line 3 (Family nashi) | 1 - 3 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| April 11, 1985 (11. 04. 85) | April 22, 1985 (22. 04. 85) |
| International Searching Authority ¹ | Signature of Authorized Officer ²⁰ |
| Japanese Patent Office | |

Form PCT/ISA/210 (second sheet) (October 1981)